# EUROPEAN PATENT APPLICATION

(11) **EP 4 527 696 A1**
(43) Date of publication of application: **26.03.2025**
(21) Application number: 24383001.5
(22) Date of filing: 19.09.2024
(51) Int. Cl.: B60R 13/10, G09F 5/00

(54) **METAL BASE FOR LICENSE PLATE**

(30) Priority: 22.09.2023 ES 202330793
(71) Applicant: INDUSTRIAS SAMAR'T, S.A., 17600 Figueres (Girona) (ES)
(72) Inventor: Sánchez Casadevall, Enrique, 17600 Figueres (Girona) (ES)
(74) Representative: Munoz Garcia, Antonio

(57) **Abstract**

Metal base for license plate, consisting of a flat rectangular metal part (1) whose front face (1a), reflective or not, incorporates signs and characters (2) printed on transparent film (3), which has a double ridge (4, 5) only on the upper edge (1b), the rest being a completely flat and smooth surface (6); the double ridge (4, 5) defines two longitudinal protrusions, parallel to each other and to the upper edge (1 b): an external longitudinal protrusion (4) and an internal longitudinal protrusion (5). The flat and smooth surface (6), at least on the front face (1a) of the piece (1), is suitable for applying transparent film lamination (3) with signs and characters (2) and for direct flat printing on it, using screen printing or digital printing, of other graphic and/or alphanumeric elements.

## Description

### OBJECT OF THE INVENTION

The invention, as expressed in the wording of the present specification, refers to a metal base for license plate which provides, to the function for which it is intended, advantages and characteristics, described in detail below, which represent an improvement of the present state of the art.

More specifically, the object of the invention focuses on a metal base for license plate, specifically those formed from a flat rectangular metal sheet or piece, which can be made of aluminum or steel, on whose front side or visible side are incorporated the corresponding signs and/or identifying characters for the vehicle to which it is intended, with the particularity that said base, instead of having a ridge formed by a single protrusion that runs uniformly along the entire perimeter edge of the sheet to reinforce it, as is traditional, only presents a double ridge on the upper edge of the rectangular piece that is defined by two longitudinal and parallel protrusions to each other and to said edge, an external one for reinforcement and an internal one that, in addition to enhancing the reinforcement effect among other advantages, acts as a guide to facilitate the placement of a transparent film sheet with the printed signs and identifying characters, which can be fixed by a laminating machine to the front surface of said piece.

### FIELD OF APPLICATION OF THE INVENTION

The scope of the present invention is within the industry sector dedicated to the manufacturing of vehicle accessories, specifically focusing on identification elements, particularly license plates.

### BACKGROUND OF THE INVENTION

As is well known, there are basically two types of license plates in the market, the so-called traditional ones, which are made of metal sheet, with the numbering printed, generally, by a process of embossing along with the reinforcing perimeter flange, and the plastic or methacrylate ones, generally made from a transparent and flat acrylic plate, that is printed on its back side through lamination of several layers.

There are also known plates that, as in patent ES2612727B1, combine both types of plates, that is, traditional metal plates and more aesthetic acrylic plates, which essentially comprise, joined by lamination, a lower metal base made of aluminum sheet with a perimeter reinforcement, an intermediate sheet, made of reflective material or a painted layer of said material, and a transparent upper sheet of methacrylate that incorporates printed logos and alphanumeric characters and that protects and beautifies the intermediate sheet. However, this plate entails a complicated and economically costly manufacturing process, especially because it includes two components: the metal base at the bottom and the acrylic base on top.

Likewise, according to document ES2800225A1, another type of plate is known that combines both types of bases, specifically a metallic base, usually made of aluminum, with a peripheral rim that defines a central recess on its front face and on top of this a thin film sheet of a few microns with printed signs and characters, which is fixed embedded in said recess by means of a portable laminating press. However, although this solution is cheaper and simpler, placing the printed film sheet in the central recess with the laminating machine is neither practical nor easy since the base flange is a projection that can either be deformed or can cause deviations when placing the film correctly.

The objective of the present invention is, therefore, the development of an improved metal base for this type of plate that combines the sheet metal base with the fixing of printed film with identifying characters to avoid the inconveniences of bases with a perimeter flange.

Furthermore, it is important to consider that the current trend, where everything is digitally manufactured, license plates must also be able to be quickly and economically manufactured, allowing for the immediate inclusion of not only the identifying signs and characters of the vehicle to which the plate is intended, but also other graphic and/or alphanumeric elements, such as logos and advertising information from dealerships and/or workshops that manufacture, sell, and install license plates on vehicles, allowing them to be directly included on the surface of the plate base or on the film on which said signs and characters are printed, through computer programs that allow for the rapid and low-cost modification of these advertising elements, avoiding the production of traditional plastic accessory supports on which the plate is mounted, which are much more expensive to manufacture and print.

On the other hand, and as a reference to the current state of the art, at least on the part of the applicant, it is unknown the existence of any other metallic base for license plate, or any other invention of similar application, which presents technical and structural characteristics equal or similar to those of the one claimed here.

### DISCLOSURE OF THE INVENTION

The metallic base for license plate that the invention proposes constitutes an optimum solution to the above-mentioned objectives which, in turn, represents an improvement over what is already known, the characterizing details that make it possible and that distinguish it being conveniently included in the final claims accompanying the present description.

What the invention proposes, as mentioned above, is a metallic base for a license plate, specifically a base made of a flat, rectangular metal plate or piece, which may be made of aluminum or steel, on whose front or exposed face, i.e. the face which is exposed to the observer once the license plate has been fixed to the vehicle to which it is intended and which may or may not be reflective, is incorporated the corresponding identifying signs and/or characters in each case, the corresponding signs and/or identifying characters are incorporated in each case, which base, instead of having a ridge formed by a single protrusion that runs uniformly along the entire contour or perimeter edge of the plate that constitutes it as a means of reinforcing it, as occurs in traditional license plates, in this case is essentially distinguished by the fact that it only has a single protrusion that runs uniformly along the entire contour or perimeter edge of the plate as a means of reinforcing it, as occurs in traditional license plates, in this case it is distinguished, essentially, by the fact that it only has a double ridge on the upper edge of the rectangular piece that forms said plate, while the rest of the piece defines a completely flat surface, said double ridge being defined by two longitudinal protrusions that, covering the entirety of said upper edge, are parallel to each other and parallel to said upper edge of the metallic piece, consisting in particular of an external longitudinal protrusion which serves as reinforcement and an internal longitudinal protrusion which, in addition to increasing the reinforcement effect, among other advantages, acts as a guide to facilitate the placement of a sheet of transparent film with the printed identification signs and characters and which can thus be fixed by means of a laminating machine to the front surface of the flat part which defines the rest of the surface of the front face of the part which constitutes the metallic base.

With this, the external protrusion of the double ridge that the base of the invention presents and that provides said reinforcement effect, allows that the plate from which the base is formed can be of little thickness, between 0.3 and 0.8 millimeters, whether it is made of aluminum or steel, with which, as is known, the less thick, the less the material weighs and the more economical the plate is.

For its part, the inner protrusion of the double ridge which presents the base of the inner invention, apart from increasing the reinforcement, serves to guide the application of the film with the printed signs and characters which, preferably, is a film of transparent material and with signs and characters incorporated either on the front or on the back.

Preferably, said inner protrusion serves as an application line to which the upper edge of the transparent film with printed signs and characters is fitted.

Furthermore, said inner protrusion of the double ridge on the upper edge of the base also serves as a means to protect the transparent film from potential damage on its upper edge caused by washes of all kinds, whether they are high-pressure, with a roller, etc., carried out on the vehicle, as it establishes a barrier to which the upper edge of said film conforms.

At the same time, said bar which defines the inner protrusion of the double ridge of the upper edge of the metallic base of the invention, also acts as a means which protects the transparent film with the printed signs and characters from the entry of all kinds of dirt on the upper edge of said film which is usually the most exposed to the entry of dust or foreign bodies, simply because it is the place where they end up on it simply by gravity.

Likewise, the bar that defines the inner protrusion of the double ridge of the upper edge of the metallic base of the invention, also acts as a means that protects the transparent film with the printed signs and characters against blows, scratches and wear caused by external elements such as branches, etc.

Finally, the rest of the surface of the part forming the base of the invention, which is not affected by the described double ridge, being completely flat and without any edge or protrusion, allows, in addition to the application by lamination of the transparent film with signs and identifying characters, the flat printing on the front or exposed side of the base directly with silkscreen or digital printing of graphic and/or alphanumeric elements, for example of the company names of the workshops, of government brands, of advertising, etc.

### DESCRIPTION OF THE DRAWINGS

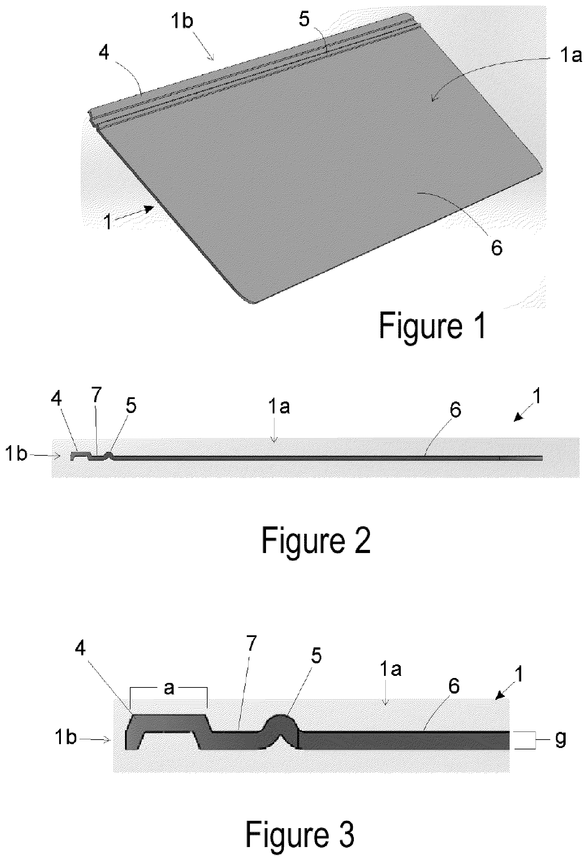

To complement the description being made and in order to help a better understanding of the characteristics of the invention, the present specification is accompanied, as an integral part of the same, by a set of drawings in which the following has been illustrated in an illustrative and non-limiting manner:
Figure number 1.- Shows a perspective view of the front part of a first example of the metal base for a license plate object of the invention, specifically an example for a rectangular plate, appreciating its configuration and parts.
Figure number 2.- Shows a profile view of the example of the metal base of the invention shown in figure 1, appreciating the configuration and arrangement of the double ridge that the sheet metal forming said base presents on the upper edge of it.
Figure number 3.- Shows an enlarged view of detail A indicated in figure 2, allowing a better appreciation of the configuration of the two protrusions forming the double ridge of the upper edge of the same.
Figures number 4 and 5.- Show respective views of the base profile, similar to figures 2 and 3 respectively, in this case including the transparent film with the signs and identifying characters of the license plate.
Figure number 6.- Shows a front elevation view of another example of the metal base of the invention, in this case an example for an elongated license plate.

And figure number 7.- Shows a perspective view of another example of the metal base for a license plate according to the invention, in this case an example for a motorcycle plate or similar.

### PREFERRED EMBODIMENT OF THE INVENTION

In view of the aforementioned figures, and in accordance with the adopted numbering, it can be observed therein several examples of non-limiting embodiment of the metallic base for license plate of the invention, which comprises what is indicated and described in detail below.

Thus, as can be seen in said figures, the metallic base object of the invention is one of those formed from a flat and rectangular metallic piece (1) on whose front face (1a), i.e. the one exposed to the observer once the license plate has been fixed to the vehicle to which it is intended and which may or may not be reflective, are incorporated signs and identifying characters (2) printed on a sheet of transparent film (3), with the particularity that said part (1) has a double ridge (4, 5) that covers only the upper edge (1b) of the rectangular part (1) that forms said base, while the rest of the part (1) has, at least on its front face (1a), a completely flat and smooth surface (6).

It should be understood that the upper edge (1b) of the part (1) forming the metal base of the invention is that which, once the license plate is placed on the vehicle, is located above, since the plates are normally located in a vertical position, so that the front face (1a) or visible face is in front of the observer.

Furthermore, said double ridge (4, 5) is defined by two longitudinal protrusions, parallel to each other and parallel to said upper edge (1b) of the piece (1), which cover the entirety of said upper edge (1b) and consist of:
- an external longitudinal protrusion (4), which serves as reinforcement of the piece (1), and
- an internal longitudinal protrusion (5) that, in addition to enhancing the reinforcing effect of the part (1),
   - constitutes a means of guidance to facilitate the positioning of the transparent film sheet (3) with the identification signs and characters (2) printed on its front or back by means of a laminating machine,
   - constitutes an adjustment line of the upper edge of said transparent film (3),
   - constitutes a barrier that protects the transparent film (3) from deterioration due to vehicle washings,
   - constitutes a barrier that protects the transparent film (3) from the ingress of dirt at the upper edge of the film,
   - and constitutes a barrier that protects the transparent film (3) against knocks, scratches and wear caused by external elements such as branches, etc.

And, on the other hand, said flat and smooth surface (6) which presents the rest of the part (1), at least on the front side (1a) of the part (1), constitutes a surface suitable for the application by lamination of the transparent film (3) with the identifying signs and characters (2) and a surface suitable for the flat printing directly on the same, with silk-screen printing or digital printing, of other graphic and/or alphanumeric elements.

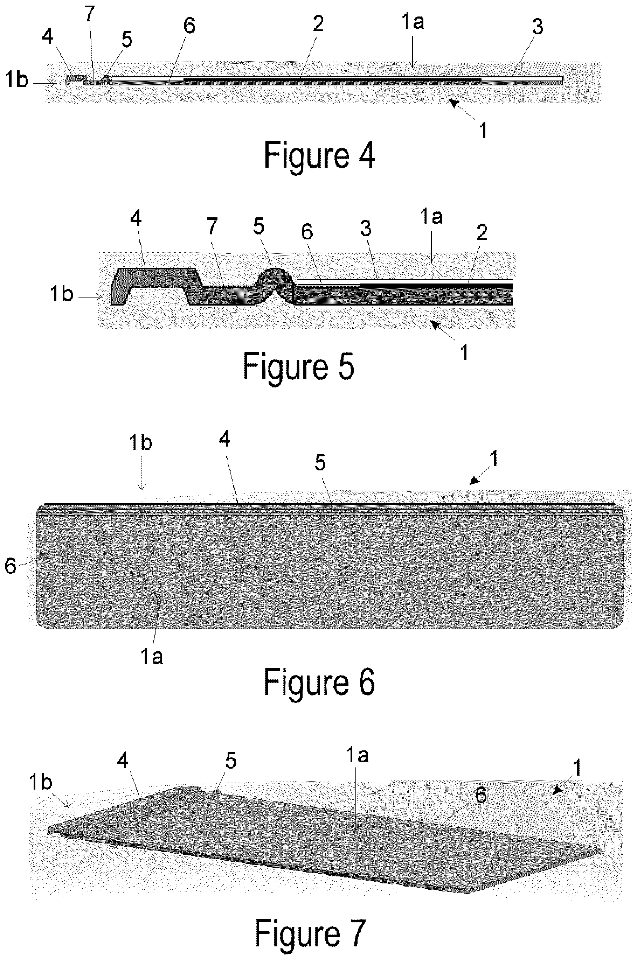

Figures 3 and 5 show how, preferably, the external longitudinal protrusion (4) is slightly wider (a) than the internal longitudinal protrusion (5). Specifically, in a preferred embodiment, the outer longitudinal protrusion section (4) defines a broad flat raised portion or plateau (a), while the inner longitudinal protrusion section (5) defines a narrow mound.

Furthermore, in any case, preferably, the outer longitudinal protrusion (4) and the inner longitudinal protrusion (5) are separated from each other by an intermediate longitudinal section (7) which, defined by a flat valley, in turn, also contributes to extending the reinforcing effect of the part (1).

With this, preferably, the base component (1), which can be made of aluminum or steel, advantageously has a thickness (g) of only between 0.3 and 0.8 millimeters.

Having sufficiently described the nature of the present invention, as well as the manner of putting it into practice, it is not considered necessary to further explain it so that any person skilled in the art may understand its scope and the advantages derived therefrom, it being noted that, within its essentiality, it may be put into practice in other forms of realization which differ in detail from the one indicated by way of example, and to which the protection claimed will also apply provided that its fundamental principle is not altered, changed or modified.

## Claims

1. Metal base for license plate, formed from a flat and rectangular metal piece (1) on whose front face (1a), i.e., the one exposed to the observer once the license plate is fixed to the vehicle for which it is intended and which can be reflective or not, signs and identifying characters (2) printed on a transparent film sheet (3) are incorporated, is **characterized in that** said piece (1) has a double ridge (4, 5) that covers only the upper edge (1b) of the rectangular piece (1) that forms said base, while the rest of the piece (1) has, at least on its front face (1a), a completely flat and smooth surface (6); wherein said double ridge (4, 5) is defined by two longitudinal protrusions, parallel to each other and parallel to said upper edge (1b) of the piece (1), which cover the entire upper edge (1b) and consist of:
- an external longitudinal protrusion (4), which serves as reinforcement of the piece (1), and
- an internal longitudinal protrusion (5) that, in addition to enhancing the reinforcing effect of the part (1),
- constitutes a means of guidance to facilitate the positioning of the transparent film sheet (3) with the identification signs and characters (2) printed on its front or back by means of a laminating machine,
- constitutes an adjustment line of the upper edge of said transparent film (3),
- constitutes a barrier that protects the transparent film (3) from deterioration due to vehicle washings,
- constitutes a barrier that protects the transparent film (3) from the ingress of dirt at the upper edge of the film,
- and constitutes a barrier that protects the transparent film (3) against knocks, scratches and wear caused by external elements such as branches, etc.;
and **in that** said flat and smooth surface (6) which presents the rest of the part (1), at least on the front side (1a) of the part (1), constitutes a surface suitable for the application by lamination of the transparent film (3) with the identifying signs and characters (2) and a surface suitable for the flat printing directly on the same, with silk-screen printing or digital printing, of other graphic and/or alphanumeric elements.

2. Metal base for license plate, according to claim 1, **characterized in that** the external longitudinal protrusion (4) is wider (a) than the internal longitudinal protrusion (5).

3. Metal base for a license plate, according to claim 1 or 2, **characterized in that** the section of the external longitudinal protrusion (4) defines a raised portion or wide and flat plateau (a), and the section of the internal longitudinal protrusion (5) defines a narrow mound.

4. Metal base for license plate, according to any of the previous claims, **characterized in that** the external longitudinal protrusion (4) and the internal longitudinal protrusion (5) are separated from each other by an intermediate longitudinal section (7) which, defined by a flat valley, contributes to enhancing the reinforcement effect of the piece (1).

5. Metal base for license plate, according to any of the previous claims, **characterized in that** the piece (1) is made of aluminum or steel.

6. Metal base for license plate, according to claim 5, **characterized in that** the piece (1) has a thickness (g) between 0.3 and 0.8 millimeters.
